# EUROPÄISCHE PATENTANMELDUNG

(11) **EP 4 651 402 A1**
(43) Veröffentlichungstag der Anmeldung: **19.11.2025**
(21) Anmeldenummer: 25170260.1
(22) Anmeldetag: 14.04.2025
(51) Int. Cl.: H04B 10/80, F42C 17/04

(54) **INTEGRIERTE SYSTEME MIT EINER SCHNITTSTELLE ZUM DRAHTLOSEN UND FUNKFREIEN ÜBERTRAGEN VON DATEN UND ENERGIE**

(30) Priorität: 10.05.2024 DE 102024001538
(71) Anmelder: MBDA Deutschland GmbH, 86529 Schrobenhausen (DE); Bayern-Chemie Gesellschaft für flugchemische Antriebe mbH, 84544 Aschau am Inn (DE)
(72) Erfinder: WENDLER, Frank, 82288 Kottgeisering (DE); MUSSBACH, Günter, 84544 Aschau am Inn (DE); STUCKY, Volker, 86554 Pöttmes (DE)
(74) Vertreter: Isarpatent

(57) **Zusammenfassung**

Offenbart ist eine Systemschnittstelle zum Starten, Überwachen, Konfigurieren und/oder Schützen einer Vorrichtung. Die Systemschnittstelle umfasst eine Mastereinheit mit einem Modul zum optischen Übertragen von Daten und einem Modul zum Aussenden von Licht; und eine erste Slaveeinheit mit einem Modul zum optischen Übertragen von Daten und einem Modul zum Umwandeln von Licht in elektrische Energie; wobei die Mastereinheit und die erste Slaveeinheit voneinander getrennt sind; und die Systemschnittstelle konfiguriert ist zum: Aussenden von Licht an die erste Slaveeinheit; Umwandeln des Lichts in elektrische Energie; optischen Übertragen von Daten von der Mastereinheit zur ersten Slaveeinheit unter Verwendung der elektrischen Energie.

## Beschreibung

### TECHNISCHES GEBIET DER ERFINDUNG

Die Erfindung betrifft Systeme mit Vorrichtungen, die zum drahtlosen und funkfreien Übertragen von Daten und Energie ausgestattet und konfiguriert sind. Insbesondere betrifft die Erfindung eine Schnittstelle zur Integration der Vorrichtungen in das System und Verfahren zum Starten, Überwachen, Konfigurieren und/oder Schützen der Vorrichtungen durch einen Benutzer des Systems.

### TECHNISCHER HINTERGRUND

Munition wie bspw. Luft-Boden-Raketen (air to ground missiles, AGMs), Luft-Luft-Raketen (air to air missiles, AAMs) und Raketen können von verschiedenen Trägerplattformen wie Luftfahrzeugen (bspw. Kampfjets, Hubschraubern usw.), Landfahrzeugen (bspw. gepanzerten Fahrzeugen) und/oder Wasserfahrzeugen (bspw. Flugzeugträgern, U-Booten usw.) befördert und/oder gestartet werden. Zum Starten, Überwachen, Konfigurieren und/oder Schützen der Munition, wenn diese bspw. an einer Startvorrichtung montiert ist, wird eine Verbindung zur Munition benötigt. Die Verbindung kann ein Einbinden der Munition in ein übergeordnete Führungssystem oder eine direkte Verbindung zu bspw. einem Tablet eines Benutzers ermöglichen.

An diese Verbindung sind spezielle und hohe technische Anforderungen gestellt. Die Verbindung muss bspw. ein rasches und/oder automatisches Abkoppeln von der Startvorrichtung ermöglichen und /oder die Verbindung muss hohen Anforderungen an deren Sicherheit und/oder Lebensdauer genügen, wie bspw. Anforderungen an die Explosionssicherheit und/oder Anforderungen an die Beständigkeit zur Reduktion eines Verschleiß. Die Verfügbarkeit von herkömmlichen Verbindungen zu Zwecken der Vorbereitung einer Mission und/oder Überwachung eines Zustands kann daher reduziert sein, da bspw. eine erlaubte Anzahl von Steckzyklen eingehalten werden muss, oder ein Techniker zum Benutzen der Schnittstelle zugelassen sein muss, um Fehlmanipulationen zu vermeiden.

Herkömmliche Verbindungen sind regelmäßig drahtgebunden und weisen eine hohe Komplexität auf, um den oben genannten speziellen und hohen Anforderungen zu genügen. Es wäre daher wünschenswert eine Schnittstelle bereitzustellen, welche den Zugang zu einer Munition erleichtert ohne die oben genannten speziellen und hohen Anforderungen an die Schnittstelle zu relaxieren.

In explosionsgefährdeten Umgebungen, wie bspw. der einer Munition, ist der Einsatz von Funktechnologien nur sehr eingeschränkt oder überhaupt nicht möglich. Abhängig von der Art der Munition kann jedoch vor oder während eines Einsatzes eine Konfiguration (bspw. ein Laden von Zielkoordinaten und/oder ein Sensor-Alignment wie eine Kalibrierung) der Munition über ein digitales Kommunikationsprotokoll erforderlich sein. Hierfür ist eine Daten- und ggf. eine Energieübertragung zwischen bspw. der Trägerplattform und der Munition erforderlich. Die Daten- und ggf. eine Energieübertragung kann über die Trägerplattform und/oder ein Tablet eines Benutzers erfolgen.

Die Verwendung von herkömmlichen Funktechnologien kann hinsichtlich der elektromagnetischen Verträglichkeit (EMV), hinsichtlich elektrostatischer Entladung (electrostatic discharge, ESD), oder hinsichtlich der Datensicherheit kritisch sein. Beispielsweise kann der Einsatz von Funktechnologien die Störanfälligkeit eines Systems erhöhen, die Abhörsicherheit eines Systems verringern oder die Anfälligkeit für unerlaubten Zugriff erhöhen, beispielsweise durch Hacking oder Hijacking. Funkwellen lassen sich in der Regel nur schwer räumlich begrenzen. Für große Entfernungen ist eine Übertragung von Daten oder Energie mittels Funkwellen aufgrund deren keulenartigen Ausbreitungscharakteristika überdies ineffizient.

Zum Überwachen kann es ferner erforderlich sein, Daten von oder aus Komponenten zu erfassen, welche über eine eingeschränkte Zugänglichkeit verfügen. Draht- oder leitungsgebundene Lösungen, oder andere Lösungen, die beispielsweise Durchführungen erfordern, können nachteilhaft sein, da eine oder mehrere Funktionen der überwachten Komponenten durch derartige Lösungen beeinträchtigt werden, die strukturelle Integrität von Komponenten oder Subkomponenten beeinträchtigt werden und/oder ein Wartungsaufwand erhöht werden kann. Beispielsweise sind für dichte Behälter Durchführungen von Kabeln kritisch, da Durchführungen zu Undichtigkeiten führen können. Beispiele von möglichen kritischen Anwendungen betreffen die Antriebstechnik, Vakuumtechnik oder Gasgeneratoren, wie beispielsweise in Airbags verwendet, bewegte Behälter, wie beispielsweise Räder und verfahrenstechnische Anlagen. Auch sich schnell bewegende Systeme, räumlich entfernte und/oder verteilte Systeme oder vibrierende System wie beispielsweise Fluggeräte, Weltraumgefährte, Unterwassergefährte oder Großanlagen im Bergbau sind regelmäßig schwer zugänglich.

Steckverbindungen weisen gleiche oder ähnliche Nachteile wie beispielsweise draht- oder leitungsgebundene Lösungen auf. Steckverbindungen können die strukturelle Integrität von Komponenten oder Subkomponenten verringern. Zudem oder alternativ können Steckverbindungen mechanisch empfindlich sein und/oder die Wahrscheinlichkeit einer Fehlmanipulation oder von fehlerhaften Kopplungen erhöhen. Beispielsweise kann eine Steckverbindung durch einen Schock oder durch Vibrationen mechanisch gelöst und ihre Funktion dadurch beeinträchtigt werden.

Das Erfassen von Daten erfordert ferner Energie. Geschlossene und/oder gekapselte Systeme sind auf eine oder mehrere Batterien, Akkumulator und/oder eine stationäre Stromversorgung angewiesen. Die Möglichkeit Batterien oder Akkumulatoren zu ersetzen ist in Anwendungen wie beispielsweise in der Raumfahrt oder in stationären Unterwassersystemen nur sehr eingeschränkt oder überhaupt nicht möglich. Die Lebensdauer des versorgten Systems kann durch die Lebensdauer einer Batterie und/oder deren Kapazität eingeschränkt oder begrenzt sein. Dies führt zu einer erhöhten Wartungsintensität des Systems durch die Notwendigkeit eines regelmäßigen Batterietausches. Batterien und Akkumulatoren stellen zudem regelmäßig ein Risiko für ein System dar, da die darin beinhalteten Stoffe zur chemischen Energiespeicherung Korrosion an der Batterie oder dem Akkumulator und/oder im System hervorrufen können. Batterien oder Akkumulatoren können ferner die Wahrscheinlichkeit eines Brandes erhöhen. Im Falle eines Brandes werden die Folgen durch Batterien verstärkt.

Es besteht daher ein Bedürfnis Energie und Daten in einem System drahtlos ohne Funkwellen zu übertragen, um eine Lösung für eines oder mehrere der oben genannten Probleme in einem oder in mehreren der oben genannten Anwendungsbereiche bereitzustellen, zum Starten, Überwachen, Konfigurieren und/oder Schützen von Vorrichtungen durch einen Benutzer des Systems.

Insbesondere soll eine Systemschnittstelle bereitgestellt werden, welche ein drahtloses und funkfreies Starten, Überwachen, Konfigurieren und/oder Schützen einer Vorrichtung durch einen Benutzer des Systems ermöglicht.

Aus dem Stand der Technik sind verschiedene Technologien zum drahtlosen Übertragen von Daten oder zum drahtlosen Übertragen von Energie bekannt.

Zur drahtlosen Übertragung von Daten sind Technologien zur optischen Datenübertragung mit Licht bekannt, wie bspw. Light Fidelity (LiFi), Infrared Data Association (IrDA) oder die Übertragung von Daten mittels eines Lasers. Die Technologien beruhen auf dem Prinzip, dass ein Modulator an einem Sender eine Lichtquelle den zu übertragenden Daten entsprechend ein- und ausschaltet, während eine Fotodiode am Empfänger das empfange Licht in elektrische Impulse umwandelt, welche den übertragenen Daten entsprechen.

Zur Übertragung von Energie werden normalerweise Kabel oder Leitungen verwendet. Zur draht- oder kabellosen Übertragung von Energie sind Nah- und Fernfeld-Technologien bekannt. Beispielsweise kann Energie über eine nichtresonante induktive Kopplung zwischen zwei oder über eine resonante induktive Kopplung zwischen einer Spule und einem Resonanzkreis übertragen werden. Die Verwendung von mehreren Spulen und/oder Resonanzkreis ist ebenfalls möglich. In analoger Weise kann Energie auch draht- oder kabellos über eine kapazitive Kopplung übertragen werden. Überdies ist die Umwandlung von Licht in elektrische Energie mittels Solarzellen und hieraus die Übertragung eines Lichtstrahls von einer Lichtquelle zu einer Solarzelle zur draht- oder kabellosen Übertragung von Energie bekannt.

US 2012/0055322 A1 offenbart Systeme und Verfahren zum Abschuss von Munition. Das System kann eine Abschussvorrichtung umfassen, die an ein Fahrzeug gekoppelt und so konfiguriert ist, dass sie eine Munition während des Transports durch ein Fahrzeug festhält, und die so konfiguriert ist, dass sie elektrische Signale von dem Fahrzeug zu der Munition leitet. Das System kann auch ein flexibles, abziehbares Verbindungsstück umfassen, das mit der Abschussvorrichtung verbunden ist, wobei das abziehbare Verbindungsstück einen Klebstoff zur Verbindung mit mindestens einem Teil der Munition umfasst. Das flexible, abziehbare Verbindungsstück kann so konfiguriert sein, dass es während des Transports elektrische Signale von der Abschussvorrichtung zur Munition leitet und sich von der Munition löst, wenn die Munition während eines Abschusses aus der Abschussvorrichtung austritt.

### ZUSAMMENFASSUNG DER ERFINDUNG

Die Erfindung ist durch die unabhängigen Ansprüche definiert. Die abhängigen Ansprüche definieren vorteilhafte Ausführungsformen

Eine der Aufgaben der Erfindung besteht darin, eine Systemschnittstelle bereitzustellen, welche eines oder mehrere der oben genannten Probleme in einem oder in mehreren der oben genannten Anwendungsbereiche löst, insbesondere im Zusammenhang mit der Integration von Munition in eine Trägerplattform und/oder ein übergeordnetes System.

Die Technologie soll insbesondere geeignet sein eine Vielzahl von Slaveeinheiten mit Hilfe einer Übertragung von Energie in Form von Licht mit elektrischer Energie zu versorgen, so dass zumindest eine Slaveeinheit der Vielzahl von Slaveeinheiten Daten wiederum mittels Licht an eine Mastereinheit senden kann. Die Technologie kann auch dazu verwendet werden, um einen Energiespeicher wie beispielsweise einen elektrochemischen oder physikalischen Energiespeicher zu laden. Ein Wechselintervall eines elektrochemischen Energiespeichers, beispielsweise einer Batterie und/oder eines Akkumulators, kann dadurch verringert oder hinfällig werden. In analoger Weise kann eine Lebensdauer eines Energiespeichers verlängert werden. Ein Betrieb der Slaveeinheit ohne betriebsbereiten Energiespeicher, beispielsweise aufgrund eines Defekts eines Energiespeichers oder weil die Slaveeinheit keinen Energiespeicher umfasst, kann durch die Technologie ermöglicht werden.

Gemäß einem ersten Aspekt der Erfindung umfasst eine Systemschnittstelle zum Starten, Überwachen, Konfigurieren und/oder Schützen einer Vorrichtung eine Mastereinheit mit einem Modul zum optischen Übertragen von Daten und einem Modul zum Aussenden von Licht; und eine erste Slaveeinheit mit einem Modul zum optischen Übertragen von Daten und einem Modul zum Umwandeln von Licht in elektrische Energie; wobei die Mastereinheit und die erste Slaveeinheit voneinander getrennt sind; und die Systemschnittstelle konfiguriert ist zum: Aussenden von Licht an die erste Slaveeinheit; Umwandeln des Lichts in elektrische Energie; optischen Übertragen von Daten von der Mastereinheit zur ersten Slaveeinheit unter Verwendung der elektrischen Energie.

Gemäß einem zweiten Aspekt der Erfindung umfasst ein Verfahren zum Betreiben der oben genannten Systemschnittstelle zum Starten, Überwachen, Konfigurieren und/oder Schützen einer Vorrichtung die folgenden Schritte: Aussenden von Licht an die erste Slaveeinheit; Umwandeln des Lichts in elektrische Energie; optisches Übertragen von Daten von der Mastereinheit zur ersten Slaveeinheit unter Verwendung der elektrischen Energie.

Vorteilhafte Ausgestaltungen und Weiterbildungen ergeben sich aus den abhängigen Ansprüchen sowie aus der Beschreibung unter Bezugnahme auf die Figuren.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert.
Fig. 1 zeigt eine beispielhafte Ausführungsform einer Systemschnittstelle mit einer Mastereinheit und einer Vielzahl von Slaveeinheiten.
Fig. 2 zeigt eine beispielhafte Ausführungsform eines Verfahrens zum Betreiben einer Systemschnittstelle zum Überwachen eines Systems.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

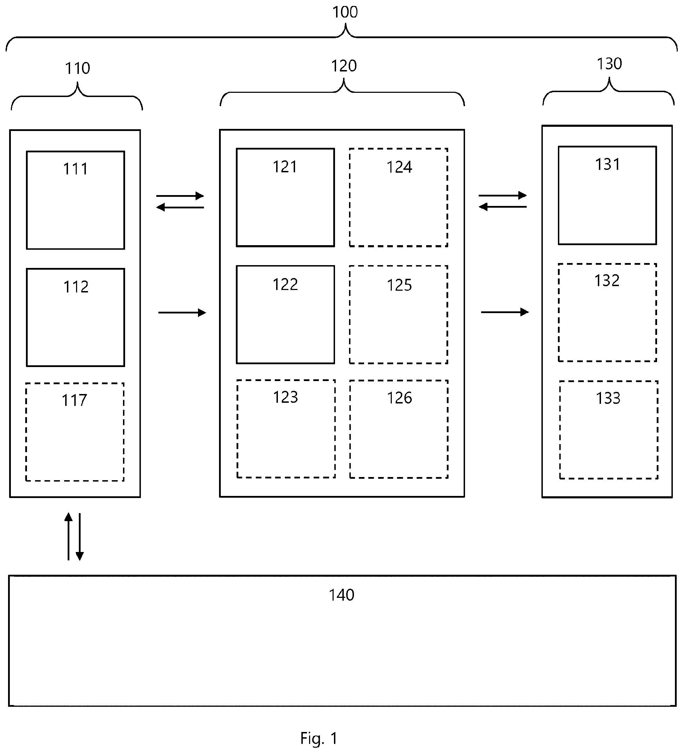

Fig. 1 zeigt eine schematische Darstellung einer beispielhaften Ausführungsform einer Systemschnittstelle 100. Die Systemschnittstelle 100 umfasst eine Mastereinheit 110 und eine erste Slaveeinheit 120. Die Systemschnittstelle 100 kann ferner eine zweite Slaveeinheit 130 umfassen oder mit dieser gekoppelt sein. Die zweite Slaveeinheit 130 ist jedoch optional. Zwischen der Mastereinheit 110 und der ersten Slaveeinheit 120 besteht keine physikalische Verbindung. Sie sind physisch voneinander getrennt. Die Mastereinheit 110 und die erste Slaveeinheit 120 sind galvanisch voneinander getrennt. Die Systemschnittstelle 100 kann keine Steckverbindungen umfassen, um die Mastereinheit 110 und die Slaveeinheit 120 miteinander zu verbinden.

Auch zwischen der ersten Slaveeinheit 120 und der zweiten Slaveeinheit 130 kann keine physikalische Verbindung bestehen. Sie können voneinander getrennt sein. Die erste Slaveeinheit 120 und die zweite Slaveeinheit 130 können aber drahtlos mittels Funktechnologie oder Induktion oder auch drahtgebunden miteinander verbunden sein, um ein Übertragen von Daten und/oder von Energie zu ermöglichen. Die Drahtverbindung kann trennbar sein, bspw. eine Steck- oder eine Kontaktverbindung sein, um die erste Slaveeinheit 120 und die zweite Slaveeinheit 130, voneinander zu trennen. Die zweite Slaveeinheit 130 kann ein Subsystem einer Vorrichtung sein. Die Vorrichtung kann bspw. ein Flugkörper sein. Die erste Slaveeinheit 120 kann entfernbar an der Vorrichtung angebracht sein.

Die Mastereinheit 110 umfasst ein Modul 111 zum optischen Übertragen von Daten (Sendeempfängermodul). Das optische Übertragen von Daten kann bidirektional erfolgen. Bspw. kann das optische Übertragen von Daten ein Senden von ersten Daten und ein Empfangen von zweiten Daten umfassen. Die Mastereinheit 110 kann ferner ein Modul 112 zum Aussenden von Licht (Lichtmodul) umfassen. Die beiden Module können räumlich voneinander getrennt sein. Beispielsweise kann das Lichtmodul 112 autark sein und in der Umgebung eines zu überwachenden Systems oder einer zu überwachenden Einheit angeordnet sein. Die Mastereinheit 110 kann ein oder mehrere weitere Module (nicht gezeigt) wie bspw. ein Speichermodul oder einen Prozessor umfassen, der konfiguriert ist, um das nachfolgend beschriebene Verfahren in der ersten Slaveeinheit 120 und/oder der zweiten Slaveeinheit 130 durchzuführen.

Die Mastereinheit 110 kann auch ein Modul 117 zum Kommunizieren mit einer übergeordneten Vorrichtung 140 umfassen und/oder in einer übergeordneten Vorrichtung 140 integriert sein. Eine übergeordnete Vorrichtung 140 kann ein tragbarer oder ein fest installierter Computer sein. Der Computer kann bspw. in ein Flugzeug, ein Fahrzeug oder ein Schiff integriert sein. Die übergeordnete Vorrichtung 140 kann eine Trägerplattform sein. Das Modul 117 kann zum drahtgebunden und/oder zum Kommunizieren unter Verwendung eines oder mehrerer 3GPP Kommunikationsstandards konfiguriert sein, insbesondere dem 3G, dem 4G und/oder dem 5G Kommunikationsstandard. Eine Kommunikation unter Verwendung der WLAN-, Bluetooth- und/oder der Nahfeldkommunikationstechnologie kann auch ermöglicht sein. Die Verwendung von anderen Standards, welche bspw. eine erhöhte Abhörsicherheit ermöglichen, kann auch ermöglicht sein. Insbesondere kann eine Kommunikation unter Verwendung der LoRaWAN-Technologie (long range wide area network) ermöglicht sein

Die erste Slaveeinheit 120 kann im Betrieb räumlich von der Mastereinheit 110 getrennt sein oder werden. Die erste Slaveeinheit 120 ist zum Betrieb ohne Funktechnologie konfiguriert. Die erste Slaveeinheit 120 muss keinen elektrochemischen oder physikalischen Energiespeicher enthalten, der die Energieversorgung der ersten Slaveeinheit 120 sicherstellt, wenn keine externe Versorgung durch Licht gegeben ist.

Die erste Slaveeinheit 120 umfasst ein Modul 121 zum optischen Übertragen von Daten (Sendeempfängermodul) und ein Modul 122 zum Umwandeln von Licht in elektrische Energie (Solarmodul). Die erste Slaveeinheit 120 kann aus den Modulen 121 bis 122 bestehen. Die erste Slaveeinheit 120 kann ferner ein Modul 123 zum Erfassen von Daten umfassen. Das Modul 123 zum Erfassen von Daten ist also optional und kann einen Sensor umfassen. Mehrere Sensoren sind auch möglich. Die erste Slaveeinheit 120 kann auch ein Modul 124 zum Speichern von Daten (Datenspeicher, optional) oder ein Modul 125 zum Speichern von Energie (Energiespeicher, optional) oder ein oder mehrere weitere Module 126 umfassen.

Die erste Slaveeinheit 120 kann insbesondere ein Schutzschalter sein. Der Schutzschalter kann ein Modul 121 zum optischen Übertragen von Daten (Sendeempfängermodul), ein Modul 122 zum Umwandeln von Licht in elektrische Energie (Solarmodul) sowie ein Schaltermodul umfassen, um eine Funktionalität einer Vorrichtung, in welcher der Schutzschalter verwendet, ein- und/oder auszuschalten. Die Mastereinheit 110 kann zum Steuern des Schutzschalters konfiguriert sein.

Der Energiespeicher 125 kann zum Betreiben der ersten Slaveeinheit 120 nicht erforderlich sein. Die erste Slaveeinheit 120 kann zu einem passiven Betrieb konfiguriert sein. Das eine oder die mehreren weiteren Module können einen Prozessor umfassen, der konfiguriert ist, um das nachfolgend beschriebene Verfahren in der erste Slaveeinheit 120 durchzuführen.

Der Energiespeicher 125 basiert entweder auf den Prinzipien der elektrochemischen oder der physikalischen Energiespeicherung. Darunter zu verstehen sind beispielsweise Batterien und Akkumulatoren (elektrochemisch) oder Kondensatoren, Spulen, Drallräder etc. (physikalisch). Gemäß einer Ausführungsform umfasst die erste Slaveeinheit 120 einen elektrochemischen Energiespeicher 125, wobei die erste Slaveeinheit 120 zum Laden des elektrochemischen Energiespeichers 125 konfiguriert ist, unter Verwendung der an die erste Slaveeinheit 120 übertragenen Energie.

Die zweite Slaveeinheit 130 kann ein Modul 131 zum optischen oder drahtgebundenen Übertragen von Daten (Sendeempfängermodul), ein optionales Modul 132 zum Umwandeln von Licht in elektrische Energie (Solarmodul), und ein optionales Modul 133 zum Erfassen von Daten umfassen. Die zweite Slaveeinheit 130 kann aus dem Modul 131 bestehen. Das Modul 133 zum Erfassen von Daten umfasst einen Sensor. Mehrere Sensoren sind auch möglich. Analog zur ersten Slaveeinheit 120 kann auch die zweite Slaveeinheit 130 ein Modul zum Speichern von Daten (Datenspeicher, optional) oder ein Modul zum Speichern von Energie (Energiespeicher, optional) oder ein oder mehrere weitere Module umfassen, wie mit Bezug zur ersten Slaveeinheit 120 beschrieben.

Das Modul 124 zum Speichern von Daten kann zum Speichern von Daten von Daten von den Sensoren der ersten Slaveeinheit 120 und von Daten von den Sensoren der zweiten Slaveeinheit 130 konfiguriert sein. Das Modul 124 zum Speichern von Daten kann das einzige Modul zum Speichern von Daten sein, welches in der ersten Slaveeinheit 120 und der zweiten Slaveeinheit 130 enthalten ist.

Der Energiespeicher 125 kann zum Speichern von Energie zum Betreiben von sowohl der ersten Slaveeinheit 120 als auch der zweiten Slaveeinheit 120 konfiguriert sein. Der Energiespeicher 125 kann das einzige Modul zum Speichern von Energie sein, welches in der ersten Slaveeinheit 120 und der zweiten Slaveeinheit 120 enthalten ist.

Die Systemschnittstelle 100 kann es ermöglichen, dass das überwachte System oder die überwachte Einheit in einer autarken, gekapselten, oder versiegelten Umgebung verbleiben kann, sofern von außen ein Sichtkontakt zum überwachten System besteht. Beispielsweise kann ein Sichtkontakt bestehend, wenn das überwachte System so angeordnet ist, dass es über ein Sichtfenster, direkt oder indirekt, beispielsweise über einen Spiegel, entlang eines Propagationspfades von Licht zugänglich ist. Durch ein Sichtfenster kann Licht auf die erste Slaveeinheit 120 im überwachten System fallen. Die Mastereinheit 110 in der Umgebung des überwachten Systems kann die erste Slaveeinheit 120 unter Verwendung eines Lichtmoduls mit elektrischer Energie versorgen.

Das überwachte System und die zum Überwachen eingesetzte erste Slaveeinheit 120 können von weiteren Umwelteinflüssen abgeschirmt sein. Ein Messergebnis kann durch einen Auslesevorgang unverfälscht bleiben, sofern das zum Betreiben der ersten Slaveeinheit 120 ausgesendete Licht das überwachte System nicht beeinflusst.

Die Systemschnittstelle 100 kann insbesondere in explosionsgefährdeten Bereichen eingesetzt werden, in welchen auf die Verwendung von elektrischen oder magnetischen Feldern verzichtet werden sollte, um eine Explosionsgefahr zu verringern.

Insbesondere kann die Systemschnittstelle 100 zum Starten, Überwachen, Konfigurieren und/oder Schützen einer Vorrichtung verwendet werden.

Zum Konfigurieren einer Vorrichtung oder eines Subsystems einer Vorrichtung kann eine Slaveeinheit 120 an oder in der Vorrichtung angebracht werden. Eine Konfiguration kann bspw. ein Laden von Zielkoordinaten oder ein Sensor-Alignment wie bspw. eine Kalibrierung der Sensoren sein. Die Systemschnittstelle 100 kann die Integration der Vorrichtung in ein übergeordnetes System ermöglichen. Die Vorrichtung kann so vor und/oder während eines Einsatzes in einer Mission konfiguriert werden.

Wenn die Slaveeinheit 120 ein Schutzschalter ist kann der Schutzschalter zum Ein- und/oder Ausschalten von Funktionalität der Vorrichtung konfiguriert sein. Der Schutzschalter kann durch die Mastereinheit 110 oder mittels der Mastereinheit 110 durch eine übergeordnete Vorrichtung 140 gesteuert werden.

Zum Überwachen eines Subsystems einer Vorrichtung kann die Systemschnittstelle 100 und/oder eine oder mehrere Komponenten davon zumindest teilweise in eine Munition integriert sein

Durch die Systemschnittstelle 100 wird eine Verfolgung von Eigenschaften eines Subsystems einer Vorrichtung in Echtzeit ermöglicht. Bspw. können Alterungsmodelle können so in Echtzeit verifiziert werden. Ferner kann die Zuverlässigkeit von Systemen durch die Verwendung der Systemschnittstelle 100 erhöht werden. Kosten können verringert werden, indem Tests zur Feststellung des Zustands des Systems vermieden werden.

Durch das Übertragen von Daten mittels Licht kann eine Ausbreitung der im Licht enthaltenen Informationen begrenzt werden. Die Informationen können so vor unerwünschtem Zugriff geschützt werden. Beispielsweise kann das Licht fokussiert, gebündelt oder so ausgestrahlt werden, dass in einem seitlichen Abstand zu einer Übertragungslinie zwischen der ersten Slaveeinheit 120 und der Mastereinheit 110 kein unerwünschter Zugriff auf die übertragenen Informationen möglich ist. Ein Fokussieren und/oder Bündeln kann beispielsweise mittels eines Lasers, einer Linse und/oder einer Apertur erfolgen. Im Vergleich zu Funkstrecken ist der seitliche Abstand bis zu welchem ein Zugriff auf die Informationen möglich ist, wesentlich verringert. Das Übertragen von Energie kann auf analoge Weise erfolgen. Es ist auch möglich die Lichtausbreitung und somit die Datenübertragung physisch, beispielsweise durch bauliche Maßnahmen wie Röhren, Kanäle usw. zu begrenzen. Durch eine physische Begrenzung durch bauliche Maßnahmen wird eine Abhörmöglichkeit von außen *de facto* ausgeschlossen.

Auch die Begrenzung der Menge an verfügbarer Energie der ersten Slaveeinheit 120 kann die Zugriffsmöglichkeiten auf die erfassten Informationen verringern. Dadurch kann der Schutz vor unerwünschtem Zugriff auf die Informationen weiter erhöht werden.

Durch die Verwendung unterschiedlicher Lichtspektren oder den Ausschluss von Farben können mehrere Übertragungskanäle realisiert oder Übertragungskanale ausgeschlossen werden. Zudem kann durch ein Steuern oder begrenzen einer Intensität des von der ersten Slaveeinheit 120 ausgestrahlten Lichts ein Übertragen von Daten auf eine gewünschte oder voreingestellte Distanz begrenzt werden.

Durch die Verwendung von spezifischen Farben oder spezifischer Bereiche des Spektrums von Licht, beispielsweise mittels optischen Filtern, können Störungen oder unerwünschte Frequenzen durch Licht aus anderen Quellen blockiert oder ausgeschlossen werden. Dadurch kann eine Signalqualität erhöht werden.

Eine erste Slaveeinheit 120 einer Systemschnittstelle 100 kann in eine erste Einheit wie bspw. eine Hülle einer Munition integriert sein oder auf dieser angebracht sein, während eine zweite Slaveeinheit 130 der Systemschnittstelle 100 in einem inneren Raum der Munition integriert sein kann. Die Hülle der Munition kann auf der ersten Slaveeinheit 120 das Modul 122 zum Umwandeln von Licht in elektrische Energie umfassen, um es dem Modul 122 zu ermöglichen, Energie zum Betreiben der ersten Slaveeinheit 120 und/oder der zweiten Slaveeinheit 130 zu erzeugen.

Das Modul 122 zum Umwandeln von Licht kann an den Stellen der Hülle der Munition angeordnet sein, welche mit der höchsten Wahrscheinlichkeit einer Lichtquelle ausgesetzt sind oder werden.

Die Mastereinheit 110 ist konfiguriert, um Energie mittels Licht auf die erste Slaveeinheit 120 und/oder die zweite Slaveeinheit 130 zu übertragen (optical wireless power transfer, OWPT), wie oben mit Bezug zur Fig. 1 beschrieben. Die zum Betreiben der ersten Slaveeinheit 120 und/oder die zweiten Slaveeinheit 130 erforderliche Energie kann innerhalb einer Zeitdauer von 1, 2, 5, 10 oder 20 Sekunden durch die Mastereinheit 110 an die erste Slaveeinheit 120 und/oder die zweite Slaveeinheit 130 übertragen werden

Die Munition kann über die Mastereinheit 110 der Systemschnittstelle 100 programmiert und/oder konfiguriert werden. So können bspw. Konfigurationsdaten, Missionsdaten, Zustandsinformationen, Kommandos, elektrischer Energie, und/oder archivierte Sensordaten usw. zwischen der Mastereinheit 110 und der ersten Slaveeinheit 120 und/oder der zweiten Slaveeinheit 130 übertragen werden, während diese bspw. an einer Trägervorrichtung montiert ist. Die Munition kann auch mehrere Slaveeinheiten umfassen, die analog zur Slaveeinheit 130 zum Senden und/oder Empfangen von Daten und/oder zum Senden und/oder Empfangen von Energie konfiguriert oder konfigurierbar sind.

Die ersten Slaveeinheit 120, kann zum Erfassen von einem oder von mehreren von einer Temperatur, einer relativen Feuchtigkeit, einem Luftdruck, einem Schock wie bspw. einer Beschleunigung über einem Schwellenwert, einer Vibration, einem Ort, usw. konfiguriert sein.

In der zweiten Slaveeinheit 130, können Sensoren vorgesehen oder enthalten sein, um Daten zu erfassen. Über die erste Slaveeinheit 120 können die Daten von der zweiten Slaveeinheit 130 drahtlos und funkfrei ausgelesen werden. Die Slaveeinheit 130 kann drahtgebunden mit der Slaveeinheit 120 kommunzieren. Es können über die erste Slaveeinheit 120 Daten an eine Mastereinheit 110 übertragen werden, die bspw. in einem Tragflug erfasst werden oder erfasst worden sind.

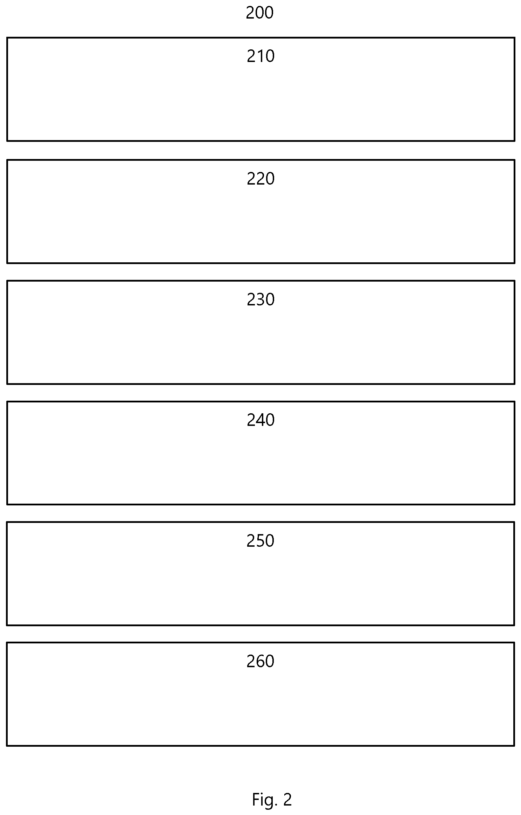

Fig. 2 zeigt eine schematische Darstellung eines Verfahrens 200 zum Betreiben einer Systemschnittstelle zum Starten, Überwachen, Konfigurieren und/oder Schützen eines Systems. Ein Schritt umfasst ein Aussenden 210 von Licht durch eine Mastereinheit 110. Ein Schritt umfasst ein Umwandeln 220 des Lichts in elektrische Energie durch eine erste Slaveeinheit 120. Ein Schritt kann ein Erfassen 230 von Daten durch die erste Slaveeinheit (120) unter Verwendung der elektrischen Energie umfassen. Ein Schritt umfasst ein optisches Übertragen (240) von Daten von der Mastereinheit (110) zur Slaveeinheit (120) oder von der ersten Slaveeinheit (120) zur Mastereinheit (110) unter Verwendung der elektrischen Energie. Die Daten können insbesondere Anweisungen umfassen, um einen Schalter zum ein- und/oder ausschalten von Funktionalität der Vorrichtung zu betätigen.

Das Verfahren kann weitere Schritte umfassen wie bspw. ein Speichern von Energie in der ersten Slaveeinheit 120, ein Übertragen 250 von Daten an eine übergeordnete Vorrichtung 140, ein Einschalten und/oder ein Ausschalten 260 von Funktionalität der Vorrichtung, oder ein Speichern von Daten in der ersten Slaveeinheit 120. Weitere Module der Slaveeinheit 120 können konfiguriert sein, um weitere Schritte des Verfahrens durchzuführen, bspw. ein Verarbeiten der erfassten Daten.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### BEZUGSZEICHEN

- 100: Systemschnittstelle
- 110: Mastereinheit
- 111: Modul zum optischen Übertragen von Daten (Sendeempfängermodul)
- 112: Modul zum Aussenden von Licht (Lichtmodul)
- 117: Modul zum Kommunizieren mit einer übergeordneten Vorrichtung
- 120: erste Slaveeinheit
- 121: Modul zum optischen Übertragen von Daten (Sendeempfängermodul)
- 122: Modul zum Umwandeln von Licht in elektrische Energie (Solarmodul)
- 123: Modul zum Erfassen von Daten (ein oder mehrere Sensoren, optional)
- 124: Modul zum Speichern von Daten (Datenspeicher, optional)
- 125: Modul zum Speichern von Energie (Energiespeicher, optional)
- 126: weiteres Modul / weitere Module (optional)
- 130: zweite Slaveeinheit
- 131: Modul zum Übertragen von Daten (Sendeempfängermodul)
- 132: Modul zum Umwandeln von Licht in elektr. Energie (Solarmodul, optional)
- 133: Modul zum Erfassen von Daten (ein oder mehrere Sensoren, optional)
- 140: übergeordnete Vorrichtung
- 200: Verfahren mit Verfahrensschritten 210 bis 260

## Patentansprüche

1. Systemschnittstelle (100) zum Starten, Überwachen, Konfigurieren und/oder Schützen einer Vorrichtung, umfassend:
eine Mastereinheit (110) mit einem Modul (111) zum optischen Übertragen von Daten und einem Modul (112) zum Aussenden von Licht; und
eine erste Slaveeinheit (120) mit einem Modul (121) zum optischen Übertragen von Daten und einem Modul (122) zum Umwandeln von Licht in elektrische Energie; wobei
die Mastereinheit (110) und die erste Slaveeinheit (120) voneinander getrennt sind; und
die Systemschnittstelle (100) konfiguriert ist zum:
Aussenden (210) von Licht an die erste Slaveeinheit (120);
Umwandeln (220) des Lichts in elektrische Energie;
optischen Übertragen (240) von Daten von der Mastereinheit (110) zur ersten Slaveeinheit (120) unter Verwendung der elektrischen Energie.

2. Systemschnittstelle (100) nach Anspruch 1, wobei die Mastereinheit (110) ferner ein Modul (117) zum Kommunizieren mit einer übergeordneten Vorrichtung (140) umfasst.

3. Systemschnittstelle (100) nach Anspruch 1 wobei:
die Mastereinheit (110) aus dem Modul (111) zum optischen Übertragen von Daten und dem Modul (112) zum Aussenden von Licht besteht; oder
die Mastereinheit (110) aus dem Modul (111) zum optischen Übertragen von Daten, dem Modul (112) zum Aussenden von Licht besteht und dem Modul (117) zum Kommunizieren mit einer übergeordneten Vorrichtung (140) besteht.

4. Systemschnittstelle (100) nach irgendeinem der Ansprüche 1 bis 3, wobei:
die Mastereinheit (110) zum Steuern der Slaveeinheit (120) konfiguriert ist; und/oder
die Mastereinheit (110) drahtlos und/oder drahtgebunden in eine übergeordnete Vorrichtung (140) integrierbar ist, wobei die übergeordnete Vorrichtung (140) zum Steuern der Slaveeinheit (120) konfiguriert ist, während die Mastereinheit (110) optional nicht zum Steuern der Slaveeinheit (120) konfiguriert und/oder konfigurierbar ist.

5. Systemschnittstelle (100) nach irgendeinem der Ansprüche 1 bis 4, wobei:
die erste Slaveeinheit (120) ein Schutzschalter ist, der zum Einschalten und/oder zum Ausschalten von Funktionalität der Vorrichtung konfiguriert sein, in die der Schutzschalter integrierbar ist.

6. Systemschnittstelle (100) nach irgendeinem der Ansprüche 1 bis 4, wobei:
die Systemschnittstelle (100) eine zweite Slaveeinheit (130) mit einem Modul (131) zum Übertragen von Daten umfasst, wobei die zweite Slaveeinheit (130) drahtlos und/oder drahtgebunden mit der ersten Slaveeinheit (120) verbindbar ist.

7. Systemschnittstelle (100) nach Anspruch 6, wobei:
die zweite Slaveeinheit (130) ein Subsystem der Vorrichtung ist, in die die Slaveeinheit (120) integrierbar ist.

8. Verfahren (200) zum Betreiben der Systemschnittstelle (100) nach irgendeinem der Ansprüche 1 bis 7 zum Starten, Überwachen, Konfigurieren und/oder Schützen einer Vorrichtung, wobei das Verfahren umfasst:
Aussenden (210) von Licht an die erste Slaveeinheit (120);
Umwandeln (220) des Lichts in elektrische Energie; und
optischen Übertragen (240) von Daten von der Mastereinheit (110) zur ersten Slaveeinheit (120) unter Verwendung der elektrischen Energie.

9. Verfahren (200) nach Anspruch 8, wobei die Daten Konfigurationsdaten zum Konfigurieren der Vorrichtung für eine Mission vor und/oder während der Mission umfassen, wenn die Vorrichtung in einem Transport- und/oder Lagerbehälter ist und/oder wenn die Vorrichtung an eine Trägerplattform montiert wird oder montiert ist, insbesondere wenn die Trägerplattform auf dem Boden, in der Luft oder zu Wasser unterwegs ist.

10. Verfahren (200) nach Anspruch 8 oder 9, wobei das Verfahren ferner umfasst:
Übertragen (250) von Daten an eine übergeordnete Vorrichtung (140);
Einschalten und/oder Ausschalten (260) von Funktionalität der Vorrichtung.
